(19)

Europäisches
Patentamt
European
Patent Office
Office européen
des brevets

(11) **EP 1 410 937 B1**

(12) **EUROPEAN PATENT SPECIFICATION**

(45) Date of publication and mention
of the grant of the patent:
**05.06.2013 Bulletin 2013/23**

(51) Int Cl.:
***B60K 5/12*** *(2006.01)*     ***F16F 7/10*** *(2006.01)*
***F16F 13/10*** *(2006.01)*

(21) Application number: **01947870.0**

(22) Date of filing: **05.07.2001**

(86) International application number:
**PCT/JP2001/005866**

(87) International publication number:
**WO 2003/004297 (16.01.2003 Gazette 2003/03)**

(54) **STRUCTURE FOR SUPPORTTING DRIVE DEVICE UNIT**

KONSTRUKTION ZUR ABSTÜTZUNG EINER ANTRIEBSVORRICHTUNGSEINHEIT

STRUCTURE DE SUPPORT D'UNE UNITE DE DISPOSITIF DE DISQUE

(84) Designated Contracting States:
**DE FR GB**

(43) Date of publication of application:
**21.04.2004 Bulletin 2004/17**

(73) Proprietor: **NISSAN MOTOR CO., LTD.**
**Yokohama-shi,**
**Kanagawa 220-8623 (JP)**

(72) Inventors:
• **WATATANI, Naoki**
**c/o Toyo Tire & Rubber Co., Ltd.**
**Osaka-shi, Osaka 550-0002 (JP)**

• **ISHIDA, Terukazu**
**c/o Toyo Tire & Rubber Co., Ltd.**
**Osaka-shi, Osaka 550-0002 (JP)**
• **SAKATA, Tesshin**
**Machida-shi, Tokyo 194-0041 (JP)**

(74) Representative: **Strehl Schübel-Hopf & Partner**
**Maximilianstrasse 54**
**80538 München (DE)**

(56) References cited:
**EP-A- 0 834 674**    **EP-A- 0 890 468**
**GB-A- 2 126 546**    **JP-A- 10 109 550**
**JP-A- 61 220 922**    **JP-U- 4 011 125**
**US-A- 3 825 090**

**Description**

Technical Field

This invention relates to a support structure for mounting and supporting a drive unit such as an automobile engine and the like on a vehicle body.

Background Art

As a support structure for supporting a drive unit, in automotive vehicles such as a passenger car, including an engine, a transmission, etc. on the vehicle body by means of vibration-proof mounts, there is known the one dependent on a so-called pendulum mount system, which supports the drive unit integrated in a transverse direction inside the vehicle body in a suspending manner at either lateral side thereof by means of two mounts disposed above a gravity center of the unit and further supports a lower portion of the unit with a torque support portion extending in the opposite direction to a running direction of the vehicle by connecting it to the vehicle body.

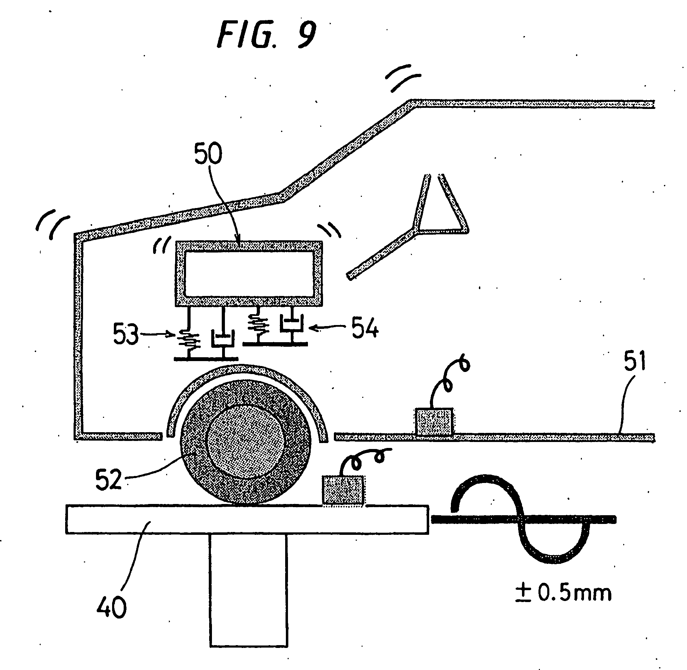

With this support structure for a drive unit, with a view to improving a riding comfort, an investigation into the relationship between vibrations transmitted from the road surface through tires to the vehicle body and characteristics of the two mounts was made by a vibration experiment as shown in Fig. 9. That is, the experiment was conducted in such a procedure that comprises while riding front wheels of the vehicle on an exciter or shaker 40, imparting a vibration in an amplitude of 0.5 mm in the vertical direction with the exciter 40, sweeping the frequency from 2 Hz to 25 Hz and measuring vertical oscillations of the floor of the vehicle body 51 affecting the riding comfort.

According to it, the excitation generated by the exciter 40 corresponds to an uneven road surface upon running of the vehicle and uniformity of the tires 52. This excitation is transmitted to the vehicle body 51, which further oscillates a drive unit 50 such as an engine supported by means of two mounts 53, 54 within the vehicle body, and as a result of its antiresonance action, the vertical vibrations of the floor of the vehicle body 51 become larger.

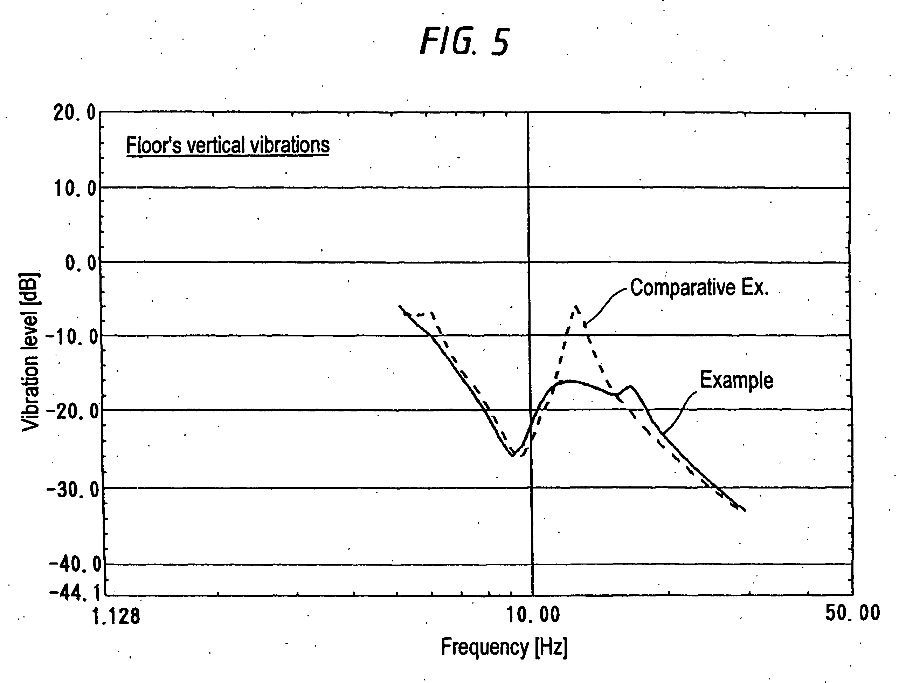

The vertical vibrations of the floor, for example as shown in dash lines in Fig. 5, are large in a low frequency region, once falls in the vicinity of 8 - 10Hz by a damper effect due to the mass weight of the drive unit 50 and becomes larger in the vicinity of 13 ~ 15 Hz owing to the antiresonance of the unit 50, generating a peak.

The vertical vibrations of the vehicle body 51 transmit from the feet the body of a passenger and are responsible for deteriorating the riding comfort. Consequently, suppressing or diminishing the vertical vibrations of the floor, in particular that at a frequency of 15 Hz and its vicinity permits an improvement in riding comfort performance.

In view of the problems mentioned above in the pendulum mount type of support structure for a drive unit, the present inventors have noted the fact that because the two right-hand and left-hand mounts are disposed above the gravity center of the unit, it is possible to unbalance easily the vibrations of the engine by tuning the spring constants and positions of the mounts, and made various investigations into relations between characteristics of the mounts such as dynamic spring constant, loss factor, etc. and vertical vibrations of the floor. As a result, the inventors have found out that the ratio between vertical dynamic spring constants of the right-hand and left-hand mounts and besides the peak frequency of loss factor of the one liquid-enclosed type vibration-proof mount affect significantly the vertical vibrations of the floor, namely the riding comfort and that by setting these parameters in specified ranges, it is possible to suppress significantly vertical vibrations in a frequency band of 12 to 17 Hz of the floor. The present invention has been made on the basis of this finding.

GB 2126546 discloses a support structure for a transverse power unit in a vehicle, which is structurally related to the present invention. but differs from the present invention in the relations of spring constants and transverse distance of the mounts from the gravity center of the power unit.

Disclosure of Invention

The invention is defined in claim 1. Further advantageous features are set out in the dependent claims.

Here, if the coefficient C in formula (a) of claim 1 is 1.2 or less, a sufficient improvement in riding comfort will not be obtainable. On the other hand, if the coefficient C is 1.9 and upwards, an adverse influence on acoustic vibration performance will be concerned about. As a consequence, the coefficient C is a variable less than 1.9.

Thereby, the vertical vibrations of the floor affecting greatly the riding comfort performance, in particular those of 12 to 17 Hz can be significantly diminished. More specifically stated, the dynamic spring constant K2 of the other mount is set as stated above in the relationship of the position of the gravity center G of the unit to the dynamic spring constant K1 of the one mount, whereby antiresonance by the right-hand and left-hand mounts to the vertical vibrations is suppressed. As a result, vibrations in a frequency band of 12 to 17 Hz higher than the frequency in the neighborhood of 8 ~ 10 Hz due to damper effect of the drive unit, notably vibrations in the frequency band around 15 Hz are effectively suppressed.

In the aforesaid support structure for a drive unit, in which at least one of the right-hand and left-hand mounts, namely the mount located at an equal distance or a remoter distance spaced apart from the gravity center G of the unit to or than the other is a liquid-filled type vibration-proof mount, the suppression effect is especially enhanced.

By setting the one mount of a liquid-filled type at such a peak frequency PHz of loss factor in the vertical direction as stated in formula (b) of claim 1, insofar as the dynamic spring constants K1, K2 of the one and the other of two mounts are set to satisfy equation (a) in terms of the relation to the position of the gravity center G of the unit, viz, the distance from the gravity center G, it is possible to set a peak frequency of loss factor higher than the conventional level, e.g. a higher value than 12 Hz. Thereby it is possible to suppress the vertical vibrations of the floor due to antiresonance of the drive unit. In particular, by setting the peak frequency of the loss factor in a range of 12 to 17 Hz, it is possible to enhance the effect of suppressing the vertical vibrations of the floor.

Brief Description of Drawings

Fig. 1 is a modeled view of a support structure for a drive unit with which this invention is concerned as viewed from the front side of a vehicle;

Fig. 2 is a model view of the support structure in Fig. 1 as viewed from top plan;

Fig. 3 is a longitudinal sectional view showing one example of a liquid-sealed vibration-proof device for use in the one mount;

Fig. 4 is a longitudinal sectional view showing one example of a vibration-proof device for use in the other mount;

Fig. 5 is a diagram by frequency response analysis showing characteristics of vertical vibrations of the floor when the dynamic spring constants according to this invention are applied to the two right-hand and left-hand mounts in the support structure above;

Fig. 6 is a characteristic diagram in the support structure above, when equation (b) is applied to setting of the peak frequency of vertical loss factor of the liquid-sealed mount;

Fig. 7 is a characteristic diagram showing the relationships between a change in coefficient C in equation (a) and vibration level of the floor;

Fig. 8 is a characteristic diagram showing a change in improved vibration level of the floor with the change of the peak frequency of the loss factor of the liquid-sealed mount; and

Fig. 9 is an illustration indicating the outline of a vibration experiment.

Best Mode for Carrying Out the Invention

Working examples of the invention will be hereinafter described with reference to the drawings.

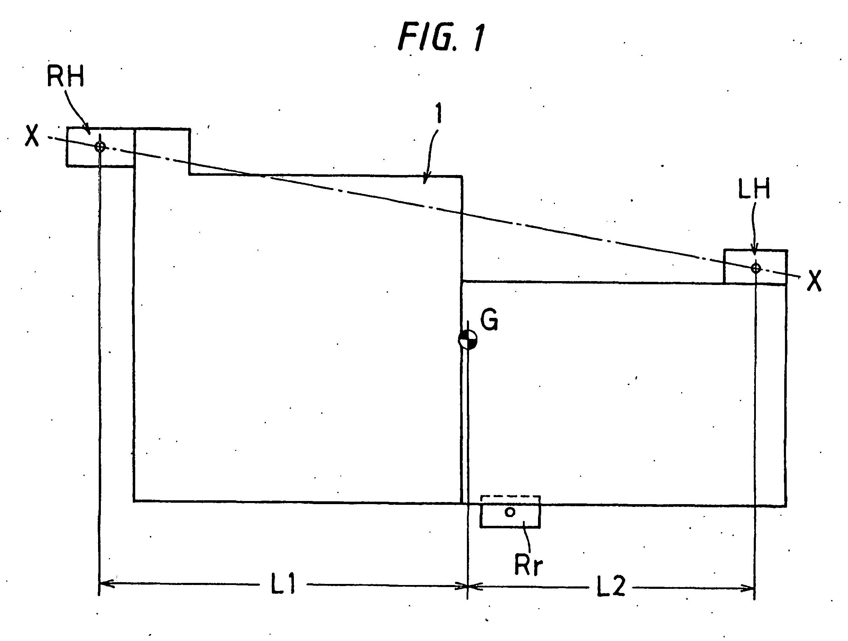

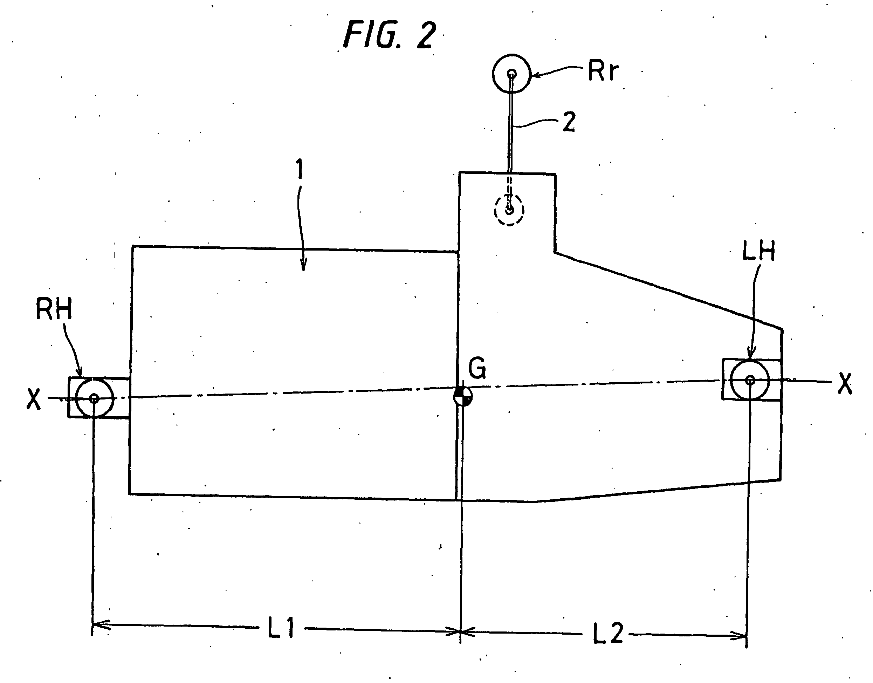

Fig. 1 and Fig. 2 show a model of a support structure of this invention, wherein the reference numeral 1 is a drive unit such as engine, etc., which is, inclusive of a transmission in addition to the engine, usually constructed by assembling in a casing and transversely mounted inside the vehicle body of an automobile. Fig. 1 is a view (front elevation) as viewed from the front side in the running direction of the vehicle.

This drive unit 1 is supported by two mounts RH and LH disposed upwardly of a gravity center G of the unit at the right and left sides thereof in a suspending state and a lower part of the unit 1 is supported by a torque support portion Rr connected to the vehicle body through a torque rod 2 extending in the opposite direction of a running direction of the vehicle, thus constructing a support structure according to a pendulum mount system. In Figs. 1 and 2, there are shown the one mount RH located at the right side relative to the running direction on the left of the figures and the other mount LH located at the left side relative to the running direction on the right of the figures.

In the aforesaid support structure, one of the two right-hand and left-hand mounts RH, LH, for example, the mount RH remoter from the position of the gravity center G of the unit is of a liquid-enclosed vibration-proof device and the other mount LH closer to the gravity center G is of a solid vibration isolating device.

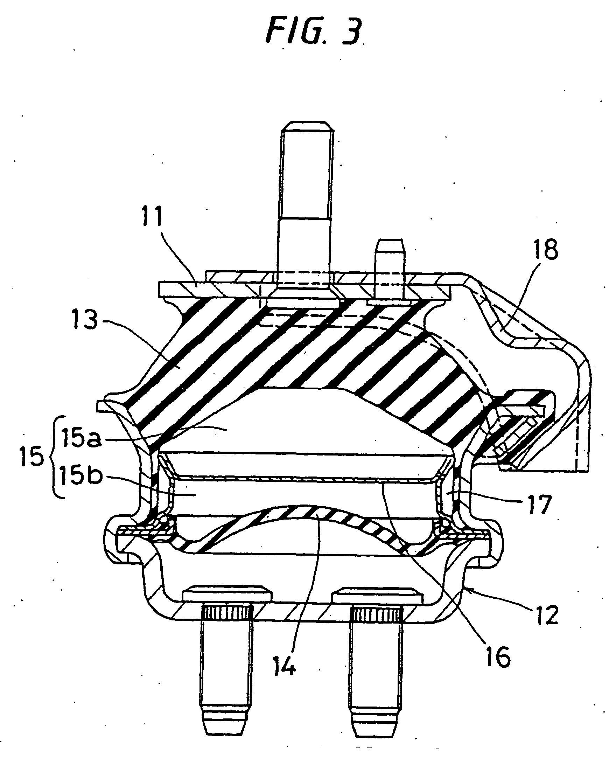

Fig. 3 illustrates one example of a liquid-enclosed vibration-proof device used for the one mount RH. This vibration-proof device comprises an upper fitting 11 adapted to be fitted to the one of the drive unit and the vehicle body a lower fitting 12 adapted to be fitted to the other, a generally truncated conical vibration-isolating base 13 made of rubber-like elastomer interconnecting these fittings 11, 12, a diaphragm 14 disposed to oppose the vibration-isolating base 13 on the fitting 12 side, a liquid chamber 15 formed between the vibration-isolating base 13 and the diaphragm 14, a partition 16 dividing the liquid chamber 15 into a main liquid chamber 15a and a subsidiary liquid chamber 15b, and an orifice 17 formed at an outer peripheral portion of the partition 16 to put the main liquid chamber 15a and the subsidiary liquid chamber 15b into communication with each other. The vibration-proof device thus constructed is adapted to exhibit a vibration damping function due to the fluidization effect of the liquid between both liquid chambers 15a, 15b through the orifice 17 and to exhibit a vibration isolating function due to the vibration-isolating base 13. The reference numeral 18 designates a stopper fitting restraining a large displacement.

Another liquid-sealed vibration-proof devices of various structures can also be used. For example, for the aforementioned vibration-proof device, it is possible to provide a rubber-like elastic membrane in the central area of the partition 16 in order to diminish the dynamic spring constant in a high frequency region. Again, a double orifice type vibration-proof device, in which two orifices communicating with the main liquid chamber and the subsidiary liquid chamber are provided inside the main body, or cylindrical type liquid-sealed vibration-proof device may also be used.

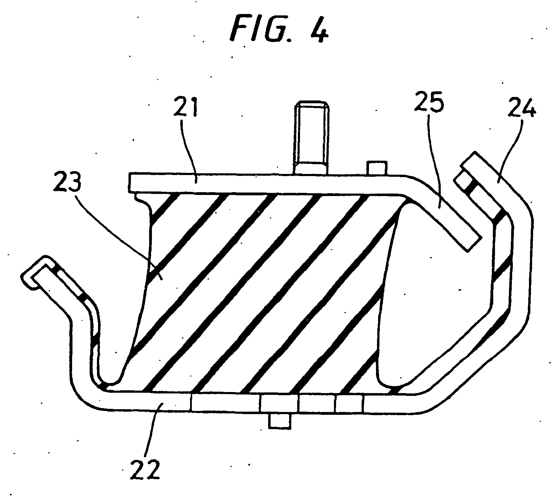

On the other hand, as the other mount LH, for example, a conventional type vibration-isolating device as shown in Fig. 4 is used, which comprises an upper attachment fitting 21, a lower attachment fitting 22, and a solid rubber like elastomer 23 interconnecting both fittings 21,22. The reference numbers 24, 25 designate a stopper portion restraining a large displacement.

The mount LH is not limited to that as illustrated, but another various forms of vibration-isolating devices may be used. A liquid-sealed type of vibration-proof device may be used, as well.

In the support structure of the drive unit 1 thus constructed, if the dynamic spring constant in the vertical direction of the one mount RH of the aforesaid two right-hand and left-hand mounts is K1 and the dynamic spring constant in the vertical direction of the other mount LH is K2, and distances in the horizontally transverse directions of from a gravity center G of the unit 1 to the perpendicular positions from centers of the one and the other mounts RH, LH are L1 and L2, respectively, then the dynamic spring constant K2 of the other mount LH shall be set to satisfy equation (a) given below:

Preferably when the dynamic spring constant K1 in the vertical direction of the one liquid-sealed mount RH is in a range of 100 to 220 N/mm, more preferably in a range of 140 to 200 N/mm, K2 is set to satisfy equation (a) given below, where the symbol C in equation (a) is a coefficient and a variable of 1.3 or upward, more preferably less than 1.9.

(a)

$$K2 = C \cdot \frac{L1}{L2} \cdot K1$$

For example, when the dynamic spring constant K1 of the one (usually right-hand side in the vehicle running direction) mount RH is 160 N/mm and the distances L1, L2 are 500 mm and 400 mm, respectively, the dynamic spring constant K2 of the other mount LH becomes 370 N/mm from the above-mentioned equation (a).

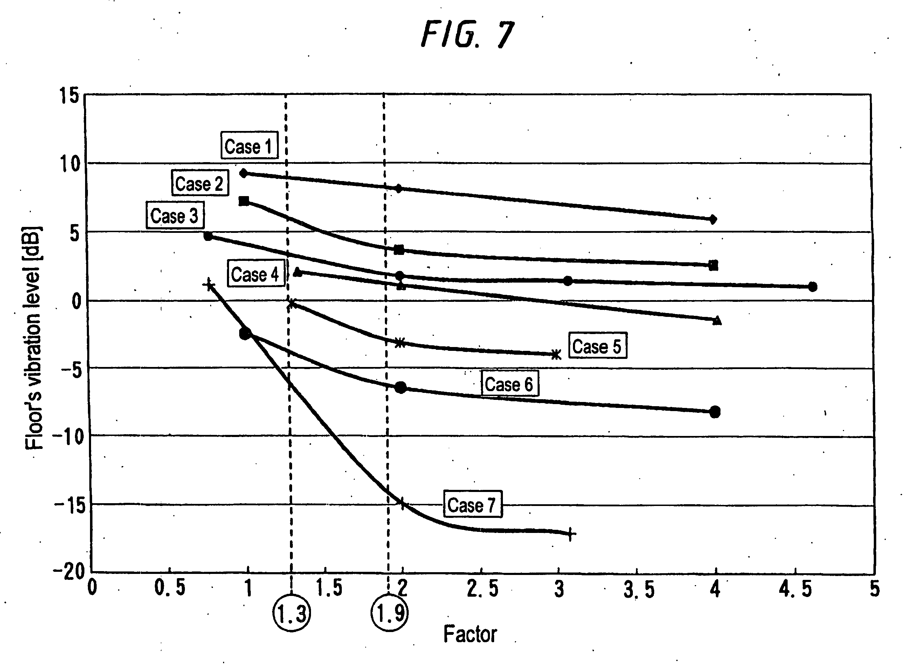

The range of the coefficient C in equation (a) above was obtained from the results with Case 1 to Case 7 mentioned below, which were analyzed and investigated on the characteristic change in vibration level of the floor due to differences in coefficient C. Fig. 7 shows its characteristic diagram, where Case 1 to Case 7 are set to have respective dynamic spring constants K1, horizontally transverse distances L1 and L2 from the gravity center G of the unit as given below. Of these, Case 6 and Case 7 are of a liquid-sealed vibration-proof mount, P designating a peak frequency of loss factor.

Case 1: K1=160 N/mm, L1=500 mm, L2=1000 mm
Case 2: K1=160 N/mm, L1=500 mm, L2=500 mm
Case 3: K1=160 N/mm, L1=500 mm, L2=400 mm
Case 4: K1=160 N/mm, L1=600 mm, L2=400 mm
Case 5: K1=160 N/mm, L1=800 mm, L2=400 mm
Case 6: K1=160 N/mm, L1=500 mm, L2=1000 mm P=15 Hz
Case 7: K1=160 N/mm, L1=600 mm, L2=400 mm P=15 Hz

According to Fig. 7, the smaller the coefficient C, the worse the vibration level of the floor. This is why the coefficient C is set to be in a range of 1.3 or more and more preferably less than 1.9, taking the influence upon sound vibration performance of the vehicle in the case of too large coefficient C values into account.

In this manner it is possible to render the vibrations of the right-hand and left-hand mounts RH, LH disposed above the gravity center G of the unit unbalanced by adjusting the relationship between the dynamic spring constants K1, K2 of the mounts RH, LH and the distances L1, L2 from the gravity center G. Because of this, the phases in vertical vibrations of the right-hand and left-hand mounts RH, LH are deviated, which acts to attenuate the vibrations in company with the damper effect due to the weight of the drive unit 1. Consequently the vertical vibrations of the floor affecting the riding comfort are significantly lowered in a frequency spectrum of 12 to 17 Hz, particularly around 15 Hz as compared with cases where the conventional mounts are used.

Further the peak frequency PHz of loss factor Lf in the vertical direction of the aforementioned one mount RH of liquid-sealed type is set to satisfy equation (b) below, insofar as the dynamic spring constants K1, K2 of the two right-hand and left-hand mounts RH, LH relative to the distances L1, L2 from the gravity center G are set according to equation (a) defined above:

(b)

$$PHz = \frac{1}{2\pi}\sqrt{\frac{K1+K2}{M}} \cdot d$$

where M is a mass of a drive unit, and d is a coefficient given by the mass M, etc. and more particularly, a variable ranging from 1.4 to 2.4.

By setting the peak frequency PHz of loss factor Lf in the vertical direction of the one mount RH of a liquid-sealed type as defined above, it is possible to set the peak frequency in a frequency band deviated significantly from the natural frequency value (7.9 Hz) of the drive unit in the vertical direction, for example 12 to 17 Hz, preferably in the vicinity of 15 Hz, as a result of which the vertical vibrations are suppressed owing to antiresonance of the unit and the vertical vibrations of the floor affecting largely the riding comfort, particularly those in a frequency band of 12 to 17 Hz can be reduced.

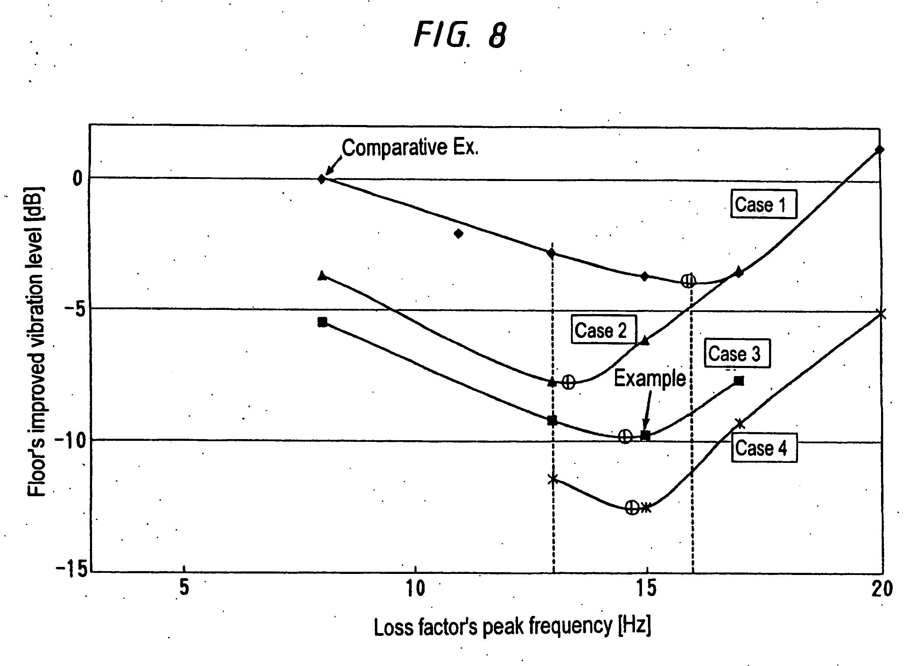

This will be evident from Fig. 8, which shows a change in improved level of vibrations of the floor with the variation in peak frequency of loss factor.

In particular, where the dynamic spring constant K2 in the vertical direction of the other mount LH against the distances L1, L2 from the gravity center G is set according to equation (a), further by setting the peak frequency PHz of loss factor in the vertical direction of the one mount LH to be about 15 Hz according to equation (b), it is possible to reduce significantly the vertical vibrations of the floor, particularly those in a frequency spectrum of 12 to 17 Hz and to enhance the riding comfort performance, accordingly.

For instance, in a support structure, wherein a liquid-sealed mount RH and a non-hydraulic mount LH are used and arranged as illustrated in Figs. 1 and 2 and the transverse distances L1 and L2 from the gravity center G are 500 mm and 400 mm, the frequency response analysis on the vertical vibrations of the floor was conducted with the present example and comparative example when dynamic spring constants and loss factors Lf at 10 Hz in the vertical, lateral and fore-and-aft (front-to-rear) directions were set as given in Table 1 below. The results obtained are shown in Fig. 5.

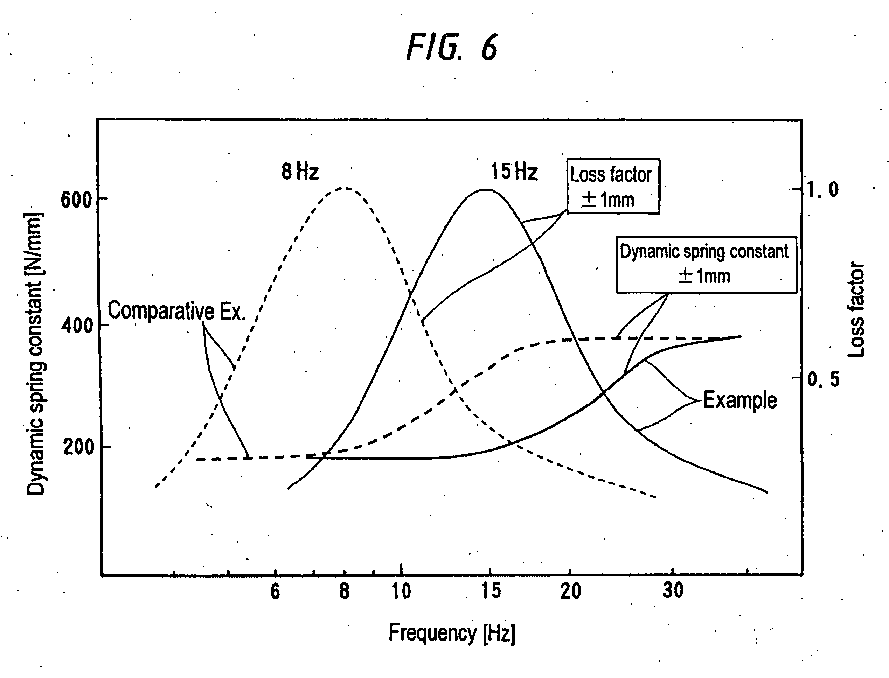

Here, as is clear from Table 1, the example of the invention meets equation (a) as regards the dynamic spring constants K1 and K2 in the vertical direction of both mounts and simultaneously satisfies equation (b) as regards the peak frequency PHz of loss factor Lf in the vertical direction of the one liquid-enclosed type mount RH. In Fig. 6 this liquid-sealed mount RH is indicated in solid lines for the dynamic spring constant and frequency characteristic of the loss factor.

On the other hand, the comparative example does not meet equations (a) and (b) above. In Fig. 6 the dash lines indicate the dynamic spring constant and the frequency characteristic of loss factor of the liquid-enclosed mount RH in the comparative example, wherein the peak frequency PHz of loss factor Lf is nearly equal to the natural frequency value (7.9 Hz) of the drive unit in the vertical direction.

In Table 1 given below, "Kd 10" designates a dynamic spring constant at a frequency of 10 Hz, "Lf 10", a loss factor at 10 Hz, and "Lf/Hz" of the right-hand mount RH in the vertical direction, a peak loss factor value and its frequency.

Table 1

| | | | Example | Comparative Ex. |
|---|---|---|---|---|
| Right-hand Mount (RH) | Vertical | Kd 10 | 160 | 220 |
| | | Lf/Hz | 1.00/15 Hz | 0.85/8 Hz |
| | Lateral | Kd 10 | 70 | 70 |
| | | Lf 10 | 0.10 | 0.06 |
| | Fore and aft | Kd 10 | 160 | 70 |
| | | Lf 10 | 0.10 | 0.06 |

(continued)

| | | | Example | Comparative Ex. |
|---|---|---|---|---|
| Left-hand Mount (LH) | Vertical | Kd 10 | 370 | 290 |
| | | Lf 10 | 0.05 | 0.05 |
| | Lateral | Kd 10 | 80 | 50 |
| | | Lf 10 | 0.07 | 0.07 |
| | Fore and aft | Kd 10 | 90 | 60 |
| | | Lf 10 | 0.07 | 0.06 |

In Fig. 5, the vertical vibrations of the floor in the comparative example are, as shown in dash lines, appreciably large in the vicinity of 12 Hz ~ 15 Hz whereas those of the example of this invention are, as shown in solid lines, significantly reduced especially in the frequency band of 12 to 17 Hz, so that the riding comfort performance is improved.

Fig. 8 indicates a change in improvement level of the vibrations of the floor due to the variation in peak frequency of the loss factor of the one liquid-sealed type mount RH. In that figure, Case 1 to Case 4 are set to have respective values of the dynamic spring constant K1, the horizontally transverse distances L1, L2 from the gravity center G of the unit as mentioned below. Case 1 corresponds to the comparative example in Table 1 above and does not satisfy equation (a). Case 2 to Case 4 are concerned with examples of this invention, among which Case 3 corresponds to the example of the invention in Table 1 above.

Case 1: K1=220 N/mm, L1=500 mm, L2=400 mm
Case 2: K1=160 N/mm, L1=500 mm, L2=500 mm
Case 3: K1=160 N/mm, L1=500 mm, L2=400 mm
Case 4: K1=220 N/mm, L1=500 mm, L2=500 mm

As is apparent from Fig. 8, the effect of improvement in vibration level of the floor vibrations is maximized at 12 Hz to 17 Hz, but with Case 1 the effect is small. As a consequence, it is possible to reduce effectively the vertical vibrations of the floor by setting as specified in this invention.

In the aforementioned examples, of the two mounts, the right-hand mount RH in the running direction of the vehicle was of a liquid-sealed type and the other left-hand mount LH was of a non-liquid-sealed type. However it is likewise possible to construct them vice versa so that a liquid-sealed type of mount is arranged on the left-hand in the running direction of the vehicle whereas a non-liquid-sealed type mount is arranged on the other side, or construct both of a liquid-sealed type, depending upon the installation conditions of the drive unit. Further alternatively both mounts of a non-liquid-sealed type may be used.

With these alternatives it is also possible to suppress the vertical vibrations in the frequency band of 12 to 17 Hz and to improve the riding comfort, by setting the parameters so as to satisfy equation (a) and equation (b) above on the basis of the one mount whose distance from the gravity center G of the unit is equal to or larger than that of the other mount.

Industrial Applicability

As described above, according to the support structure of a drive unit of this invention, the vertical vibrations of the floor at a frequency in the vicinity of 15 Hz can be significantly suppressed and consequently, it is possible to improve the riding comfort performance of an automotive vehicle equipped with it.

**Claims**

1. Combination of a drive unit for a vehicle and a support structure for the drive unit, the drive unit adapted to be incorporated in a transverse direction inside the vehicle body by means of a pendulum mount system wherein the support structure is supports the drive unit at its right-hand and left-hand sides by means of two mounts (RH, LH) disposed upwardly of the gravity center (G) of the unit in a suspending manner and further supports a lower side of the unit by means of a torque support portion (Rr) connectable to the vehicle body, the lower side of the drive unit and the torque support portion (Rr) being connected by a torque rod (2) extending in the opposite direction to the running direction of the vehicle,

wherein one (RH) of the mounts (RH, LH) laterally disposed at the right-hand and left-hand sides is a liquid-sealed vibration-proof mount, and,

assuming the dynamic spring constant in the vertical direction of the one mount (RH) to be K1, the dynamic spring constant in the vertical direction of the other mount (LH) to be K2 and horizontally transverse distances from the gravity center G to respective centers of the one mount (RH) and the other mount (LH) to be, respectively, L1 and L2, the distances L1 and L2 are set to satisfy L1 $\geq$ L2, the dynamic spring constant K2 of the other mount (LH) is set to satisfy equation (a) given below, and the peak frequency (PHz) of loss factor in the vertical direction of the one mount (RH) is set to satisfy equation (b) given below:

(a)

$$K2 = C \cdot \frac{L1}{L2} \cdot K1,$$

where C is a coefficient of at least 1.3 and less than 1.9; and
(b)

$$PHz = \frac{1}{2\pi} \sqrt{\frac{K1 + K2}{M}} \cdot d,$$

where M stands for a mass of the drive unit and d stands for a coefficient given by the mass M and is a variable ranging from 1.4 to 2.4.

2. The combination of claim 1, wherein the peak frequency of loss factor is set to be 12 to 17 Hz.

3. The combination of claim 2, wherein the peak frequency of loss factor is set to be in the vicinity of 15 Hz.

**Patentansprüche**

1. Kombination einer Antriebseinheit für ein Fahrzeug und einer Haltestruktur für die Antriebseinheit, wobei die Antriebseinheit dazu ausgelegt ist, mittels eines Pendelbefestigungssystems in einer Querrichtung innerhalb des Fahrzeugkörpers aufgenommen zu sein, wobei die Haltestruktur die Antriebseinheit auf ihrer rechten und ihrer linken Seite mittels zweier oberhalb des Schwerpunkts (G) der Einheit angeordneter Befestigungen (RH, LH) auf eine hängende Weise hält und ferner eine untere Seite der Einheit mittels eines mit dem Fahrzeugkörper verbindbaren Drehmoment-Halteabschnitts (Rr) hält, wobei die untere Seite der Antriebseinheit und der Drehmoment-Halteabschnitt (Rr) durch eine Drehmomentstange (2) verbunden sind, die in der der Laufrichtung des Fahrzeugs entgegengesetzten Richtung verläuft,

wobei eine (RH) der seitlich an der rechten und der linken Seite angeordneten Befestigungen (RH, LH) eine flüssigkeitsversiegelte schwingungsfreie Befestigung ist und,

unter der Annahme, dass die dynamische Federkonstante in der vertikalen Richtung der einen Befestigung (RH) K1 ist, die dynamische Federkonstante in der vertikalen Richtung der anderen Befestigung (LH) K2 ist und die horizontalen Abstände in Querrichtung vom Schwerpunkt G zu den jeweiligen Mittelpunkten der einen Befestigung (RH) und der anderen Befestigung (LH) jeweils L1 und L2 sind, die Abstände L1 und L2 so eingerichtet sind, dass L1 $\geq$ L2 gilt, die dynamische Federkonstante K2 der anderen Befestigung (LH) so eingerichtet ist, dass sie der Gleichung (a) unten genügt, und die Höchstfrequenz (PHz) des Verlustfaktors in der vertikalen Richtung der einen Befestigung (RH) so eingerichtet ist, dass sie der Gleichung (b) unten genügt:

(a)

$$K2 = C \cdot \frac{L1}{L2} \cdot K1,$$

wobei C ein Koeffizient von mindestens 1,3 aber unterhalb 1,9 ist; und
(b)

$$PHz = \frac{1}{2\pi}\sqrt{\frac{K1+K2}{M} \cdot d,}$$

wobei M für eine Masse der Antriebseinheit steht und d für einen durch die Masse M gegebenen Koeffizienten steht und eine Variable im Bereich von 1,4 bis 2,4 ist.

**2.** Kombination nach Anspruch 1, wobei die Höchstfrequenz des Verlustfaktors auf 12 bis 17 Hz eingestellt ist.

**3.** Kombination nach Anspruch 2, wobei die Höchstfrequenz des Verlustfaktors nahe 15 Hz eingestellt ist.

## Revendications

**1.** Combinaison composée d'une unité d'entraînement pour un véhicule et d'une structure de support pour l'unité d'entraînement, l'unité d'entraînement, adaptée pour être incorporée dans une direction transversale à l'intérieur du corps de véhicule au moyen d'un système de montage pendulaire, supporte l'unité d'entraînement sur ses côtés droit et gauche au moyen de deux montures (RH, LH) disposés vers le haut du centre de gravité (G) de l'unité d'une manière suspendue, et supporte en outre un côté inférieur de l'unité au moyen d'une partie de support de couple (Rr) pouvant être raccordée au corps de véhicule, le côté inférieur de l'unité d'entraînement et la partie de support de couple (Rr) étant raccordés par une barre de torsion (2) s'étendant dans la direction opposée à la direction de roulement du véhicule,
dans laquelle l'une (RH) des montures (RH, LH) disposée latéralement sur les côtés droit et gauche est une monture étanche aux liquides et anti-vibration, et
en supposant que la constante de rappel dynamique dans la direction verticale de la première monture (RH) est K1, que la constante de rappel dynamique dans la direction verticale de l'autre monture (LH) est K2 et que les distances horizontalement transversales à partir du centre de gravité G vers les centres respectifs de la première monture (RH) et de l'autre monture (LH) sont respectivement L1 et L2, les distances L1 et L2 sont déterminées pour satisfaire L1 ≥ L2, la constante de rappel dynamique K2 de l'autre monture (LH) est déterminée pour satisfaire l'équation (a) proposée ci-dessous, et la fréquence de pic (PHz) du facteur de perte dans la direction verticale de la première monture (RH) est déterminée pour satisfaire l'équation (b) donnée ci-dessous :

(a)

$$K2 = C \cdot \frac{L1}{L2} \cdot K1,$$

où C est un coefficient d'au moins 1,3 et inférieur à 1,9 ; et

(b)

$$PHz = \frac{1}{2x}\sqrt{\frac{K1+K2}{M}} \cdot d,$$

où M représente une masse de l'unité d'entraînement et d représente un coefficient donné par la masse M et est une variable de l'ordre de 1,4 à 2,4.

**2.** Combinaison selon la revendication 1, dans laquelle la fréquence de pic du facteur de perte est déterminée pour être de l'ordre de 12 à 17 Hz.

**3.** Combinaison selon la revendication 2, dans laquelle la fréquence de pic du facteur de perte est déterminée pour être de l'ordre de 15 Hz.

FIG. 1

EP 1 410 937 B1

FIG. 2

# FIG. 3

# FIG. 4

## FIG. 5

Floor's vertical vibrations

Vibration level [dB] vs Frequency [Hz]

Comparative Ex.

Example

EP 1 410 937 B1

FIG. 6

EP 1 410 937 B1

FIG. 7

FIG. 8

FIG. 9

EP 1 410 937 B1

±0.5mm

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- GB 2126546 A